# EUROPEAN PATENT SPECIFICATION

(11) **EP 0 542 551 B1**
(45) Date of publication and mention of the grant of the patent: **25.09.1996**
(21) Application number: 92310350.1
(22) Date of filing: 12.11.1992
(51) Int. Cl.: H04N 3/38, H04N 5/257

(54) **Film instability compensation system**
System zur Kompensation der Filminstabilität
Système de compensation d'instabilité de film

(30) Priority: 12.11.1991 GB 9123989
(43) Date of publication of application: 19.05.1993
(73) Proprietor: RANK CINTEL LIMITED, Ware Hertfordshire SG12 OAE (GB)
(72) Inventor: Mead, Terence William, Hertford, Hertfordshire SG14 3LE (GB); Such, Richard Thomas, Hertfordshire CM23 5EL (GB)
(74) Representative: Lloyd, Patrick Alexander Desmond

(56) References cited:
- WO-A-88/01822
- US-A- 3 650 448
- US-A- 4 104 680

## Description

This invention relates to methods and apparatus for compensating for positional instability of film passing through a film gate in a telecine or film writer.

The picture frames on cinematographic film are conventionally registered with the sprocket holes by means of register pins. A steady picture-display is ensured in such systems as film projection equipment can display each frame using a similar registration mechanism. However, in telecine and film writers for example, the film conventionally moves through the film gate at a steady speed and thus register pins cannot be inserted.

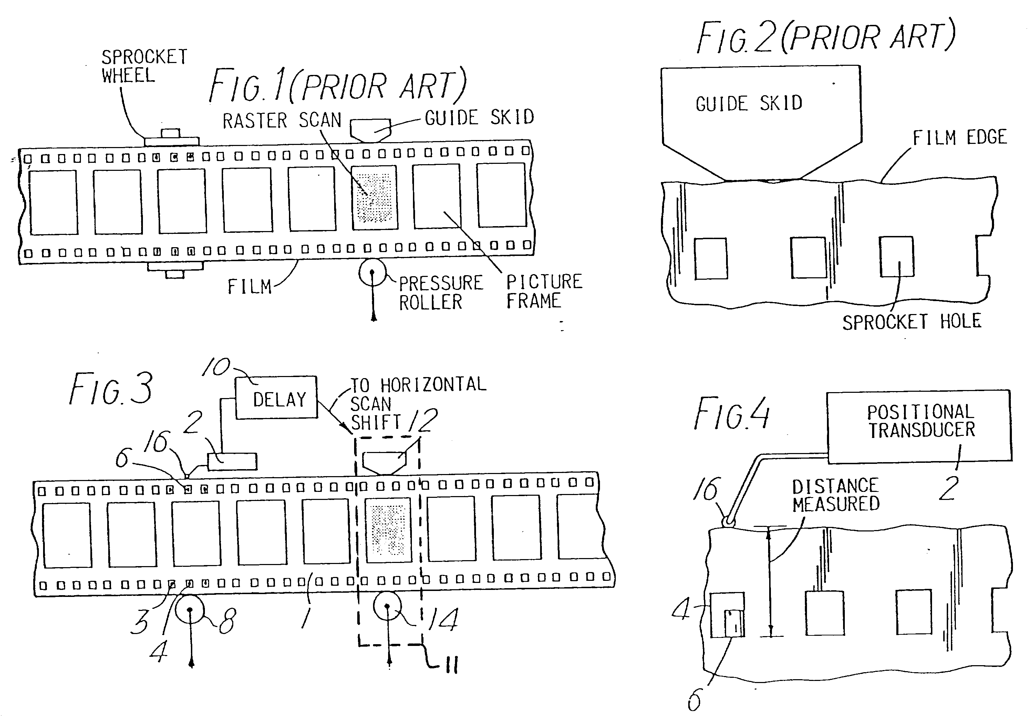

In conventional telecine equipment, the cinematographic film is positioned in the film gate by pressing one edge against the guide skid as illustrated schematically in Figure 1 and 2. As the picture frames are located relative to the sprocket holes and not the film edge, a problem arises when the edge of the film is uneven and not accurately related to the sprocket holes. In such an instance, the frame with the picture image will wander in sympathy with the irregularities in the film edge.

The CRT beam scans the same area of the film gate for each frame, thus if the frame is slightly misplaced on the film its actual position will not coincide exactly with the CRT scan. This will have the result that the displayed image will weave slightly from side-to-side. Because film manufacturers register picture frames with respect to sprocket holes little care is taken over the taughtness of the film edge, heightening film weave.

It is desirable to minimise this film instability effect, and various methods for so doing have been proposed, US patent number US-A-4104680 for example, teaches moving the CRT scan to compensate for the film motion and the error is measured by optical detection of the sprocket hole.

A disadvantage of such a system is that further errors may ensue due to the presence of dirt or dust in the sprocket hole.

United States Patent US-A-3650448 describes a film transport system and film positioning device which measures the lateral position of the film edge at the scanning position and uses deviations in that measurement as the basis for generating a correction signal with the result that the scans are registered with respect to the film edge.

According to the present invention there is provided apparatus for compensating for film instability in a film gate of an apparatus for converting between images recorded on film and video signals, in which the film is edge guided in the film gate, the converting apparatus having flying spot scanner means for scanning with a flying spot the images recorded on film at a scanning location as the film moves past the scanning location, and means for generating a scan pattern for the flying spot, the compensating apparatus comprising means for determining the position of a sprocket hole with respect to the film edge, means for deriving a compensation signal based on the determined position of the sprocket hole, means for applying the compensation signal to shift the position of said scanning beam of a flying spot scanner at a scanning location as the film moves past the scanning location, characterised in that the means for determining the position of a sprocket hole with respect to the film edge comprises means for measuring the distance between the film edge and a first sprocket hole at a position prior to the scanning location in the direction of movement of the film, the distance measuring means being arranged to bear on the edge of the film, adjacent the first sprocket hole and being arranged to measure deviations from the said measured distance in subsequent measurements of distances between the film edge and following sprocket holes, and in that the means for deriving a compensation signal derives the compensation signal from the measured deviations.

A system embodying the invention may have a number of advantages. Most notably, the problems incurred in optical sensing techniques due to the presence of dust or dirt in the sprocket holes or damaged sprocket holes are overcome as the film is registered against the teeth of a sprocket wheel, this being analogous to the register pins in a conventional cine projector, and the position of the film edge is measured at this point relative to the sprocket teeth. Preferably the distance is measured using a stylus applied to the film edge.

The invention also provides a method of compensating for film instability in an apparatus for converting between images recorded on film and images represented by video signals, in which the film is edge guided in the film gate, the converting apparatus comprising flying spot scanner means for scanning with a flying spot the images recorded on film at a scanning location as the film moves past the scanning location, and scan generation means for generating a scan pattern for the flying spot, characterised in that the method comprises measuring the distance between the film edge and a first sprocket hole on the film at a position prior to the scanning location in the direction of movement of the film, measuring the said distance at the said position for a second and subsequent sprocket holes, by arranging the measuring means to bear on the edge of the film adjacent the first sprocket hole, measuring deviations from the said distance measured at the first sprocket hole and at second and subsequent sprocket holes, deriving a compensation signal from the said measured deviations, and applying the compensation signal to the scan generation means of the flying spot scanner.

In a preferred embodiment the means for applying the compensation signal comprises means for delaying application of the compensation signal to the scan generation means of the flying spot scanner, until a sprocket hole on the film at which the compensation signal is determined arrives at the scanning location of the scan generation means. Preferably the means for applying the compensation signal comprises means for deriving a cyclic error compensation signal to compensate for cyclic errors due to relative lateral displacement of the sprocket holes on the sprocket teeth. It is advantageous to determine the cyclic errors attributable to the sprocket teeth and which repeat as the sprocket wheel rotates. These errors can be subtracted from the derived compensation signal to give a more accurate indication of the error due to film weave alone.

Embodiments of the invention will now be described by way of example, and with reference to the accompanying drawings, in which:
Figure 1 is a conventional guidance system showing a film as it passes through a telecine film gate;
Figure 2 is an enlarged view of a portion of the conventional guidance system of Figure 1;
Figure 3 is a schematic diagram of a guidance system embodying the invention;
Figure 4 is an enlarged view of a portion of the system of Figure 3;
Figure 5 is a block diagram of the compensation circuit including the delay means shown in Figure 4; and
Figure 6 is a block diagram of a further development of the compensation circuit of Figure 5.

The guidance system in Figures 3 and 4 for a flying spot scanner (not shown) shows film 1 passing over a sprocket wheel, the teeth 6 of which locate in the sprocket holes 3 of the film. The flying spot scanner scans frames and film as they pass through a film gate 11 to convert between images recorded on film and video signals. A first pressure roller 8 ensures that the film is located pressing against the inside edge of the sprocket teeth 6 on the side of the film adjacent to a positional transducer 2. This may be seen from the enlarged view of the system shown in Figure 4. A stylus 16 of the positional transducer device 2 bears on the film edge at a position prior to the scanning location 11 in the direction of movement of the film, and acts to measure the distance between the film edge and a first sprocket hole 4, and deviations therein for subsequent sprocket holes, to provide signals representative of the positional errors at the sprocket holes. The output of the positional transducer system 2 is coupled to a delay unit 10 which delays the signal corresponding to the error of a particular sprocket hole until that sprocket hole reaches the film gate, at which point it is applied as a compensation signal to shift the horizontal position of the scanning beam of the flying spot. The film passes through the film gate 11 where it is scanned by the CRT raster. The film is maintained in position laterally at this point, by a second pressure roller 14 which presses the film edge against a guide skid 12.

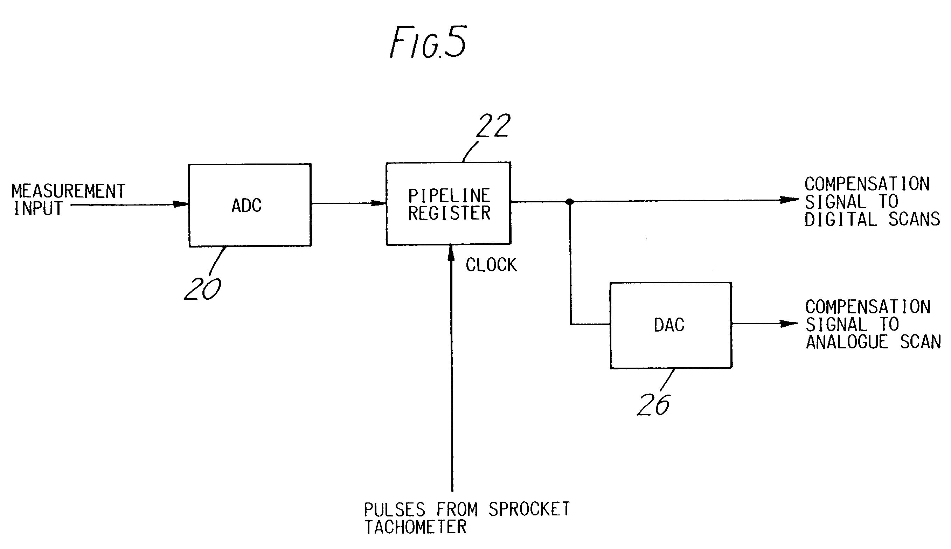

The output from the positional transducer shown in Figures 3 and 4 is digitised by a/d converter 20 as shown in Figure 5. The digitised signal is then applied to a pipeline register 22. This error signal is clocked through the pipeline register by pulses obtained from the rotation of the sprocket wheel due to movement of the film, so that the compensation signal corresponding to a particular sprocket hole is delayed and arrives at the output of the register at the same time as that sprocket hole arrives at the scanning area. The signal is then either applied directly to the scan shift to compensate a digital scanning system, or converted to an analogue signal in a d/a converter 26 and applied to compensate for horizontal weave of the film image.

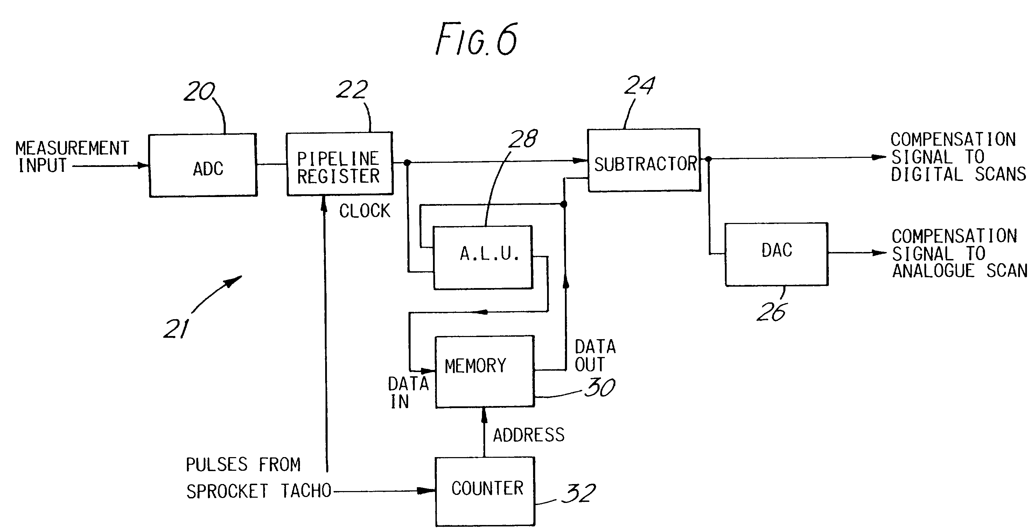

A second embodiment is shown in Figure 6. This circuit derives a further compensation signal which compensates for cyclic errors due, for example, to imperfections in the sprocket wheel such as the relative lateral displacement of the sprocket teeth.

A proportion of the output of the pipeline register 22 is added in an arithmetic logic unit 28 to a proportion of the value stored in a memory 30 corresponding to previous outputs relating to particular sprocket teeth. As the film runs, so the ALU 28 will build up stored values in the memory 30 corresponding to the errors in the location of the teeth in the sprocket wheel. The memory locations are addressed by the counter 32 which is advanced or retarded by pulses from the sprocket tachometer according to the direction of film motion, each address corresponding to one sprocket tooth. The output from the memory 30 provides signals representative of the cyclic errors and is applied to a subtractor circuit 24, which subtracts the output from memory 30 from the compensation signal from the output of the pipeline register 22 to take account of the cyclic errors, so providing an overall compensation signal.

Various alternatives to the embodiments described are possible and will occur to those skilled in the art. For example, although the system embodying the invention has been described with reference to a flying spot telecine, it would be possible for the invention to be included in a flying spot film writer system. Also, the stored signals representative of the cyclic errors present may be precalibrated or automatically entered by taking the long term average of measure$ for each tooth.

In some cases, it may be advantageous for the output of the pipeline register to be sampled at a faster rate than once per sprocket tooth as described. This may be achieved by providing more pulses from the sprocket tachometer.

The positional transducer may be a record player type stylus and a piezo-electric transducer mechanically modified to fit the telecine viewing gate.

## Claims

1. Apparatus for compensating for film instability in a film gate of an apparatus for converting between images recorded on film and video signals, in which the film is edge guided in the film gate, the converting apparatus having flying spot scanner means for scanning with a flying spot the images recorded on film at a scanning location as the film moves past the scanning location, and means for generating a scan pattern for the flying spot, the compensating apparatus comprising means (2,16) for determining the position of a sprocket hole with respect to the film edge, means (20,22;21) for deriving a compensation signal based on the determined position of the sprocket hole, means for applying the compensation signal to shift the position of the scanning beam of said flying spot scanner at a scanning location as the film moves past the scanning location, characterized in that the means (2,16) for determining the position of a sprocket hole with respect to the film edge comprises means (2,16) for measuring the distance between the film edge and a first sprocket hole at a position prior to the scanning location in the direction of the movement of the film, the distance measuring means (2,16) being arranged to bear on the edge of the film (1) adjacent the first sprocket hole, and being arranged to measure deviations from the said measured distance in subsequent measurements of distances between the film edge and following sprocket holes, and in that the means for deriving a compensation signal derives the compensation signal from the measured deviations.

2. Apparatus according to Claim 1, wherein the distance measuring means (2,16) comprises a positional transducer (2).

3. Apparatus according to Claim 2, wherein the positional transducer (2) comprises a stylus (16), and a piezoelectric transducer.

4. Apparatus according to any preceding claim comprising a sprocket wheel with a plurality of sprocket teeth (3;6), and a pressure roller (8) for bearing on the film edge to urge the edges of the sprocket holes (4) against the sprocket teeth (3;6).

5. Apparatus according to any preceding claim, wherein the means for applying the compensation signal comprises means (10;22) for delaying application of the compensation signal to the scan generation means of the flying spot scanner, until a sprocket hole on the film (1) at which the compensation signal is determined arrives at the scanning location of the scan generation means.

6. Apparatus according to any preceding claim, wherein the means for applying the compensation signal comprises means (21) for deriving a cyclic error compensation signal to compensate for cyclic errors due to relative lateral displacement of the sprocket holes (4) on the sprocket teeth (3;6).

7. Apparatus according to Claim 6, wherein the means (21) for deriving the cyclic error compensation signal comprises memory means (30) for storing signals indicative of the cyclic errors for a first and subsequent sprocket teeth, wherein the means for deriving the overall compensation signal comprises means (24) for subtracting the stored cyclic error signal for successive sprocket teeth from the compensation signals derived for successive sprocket holes, and timing means (32) for synchronising the arrival of the stored cyclic error signals and the compensation signals at the subtracting means (24).

8. A method of compensating for film instability in an apparatus for converting between images recorded on film and images represented by video signals, in which the film is edge guided in the film gate, the converting apparatus comprising flying spot scanner means for scanning with a flying spot the images recorded on film at a scanning location as the film moves past the scanning location, and scan generation means for generating a scan pattern for the flying spot, characterised in that the method comprises measuring the distance between the film edge and a first sprocket hole on the film at a position prior to the scanning location in the direction of movement of the film, measuring the said distance at the said position for a second and subsequent sprocket holes by arranging the measuring means to bear on the edge of the film adjacent the first sprocket hole,measuring deviations from the said distance measured at the first sprocket hole and at second and subsequent sprocket holes, deriving a compensation signal from the said measured deviations, and applying the compensation signal to the scan generation means of the flying spot scanner.

## Patentansprüche

1. Vorrichtung zur Kompensation von Filminstabilitäten in einem Filmfenster einer Einrichtung zur Umwandlung von auf Film aufgezeichneten Bildern in Videosignale, bei welcher der Film im Filmfenster an der Kante geführt wird und die Umwandlungseinrichtung einen Lichtpunktabtaster zur Abtastung der Filmbilder an einer Abtaststelle aufweist, wenn der Film an dieser vorbeiläuft, mit einer Einrichtung zur Erzeugung eines Abtastmusters für den Lichtpunkt, wobei die Kompensationsvorrichtung umfaßt
Mittel (2,16) zur Bestimmung der Position eines Zackenrades bezüglich der Filmkante,
Mittel (20,22;21) zur Ableitung eines Kompensationssignals aufgrund der vorbestimmten Position des Zackenrades,
Mittel zur Benutzung des Kompensationssignals zur Verschiebung der Position des Abtaststrahls des Lichtpunktabtasters an einer Abtaststelle, wenn der Film an dieser vorbeiläuft,
**dadurch gekennzeichnet,** daß
die Mittel (2,16) zur Bestimmung der Position eines Zackenloches bezüglich der Filmkante Mittel (2,16) zur Messung des Abstandes zwischen der Filmkante und dem ersten Zackenloch an einer Position vor der Abtaststelle in Bewegungsrichtung des Filmes gesehen aufweisen, daß die Abstandsmessungsmittel (2,16) gegen die Kante des Films (1) neben dem ersten Zackenloch anliegen und so eingerichtet sind, daß sie Abweichungen von der gemessenen Distanz bei nachfolgenden Distanzmessungen zwischen Filmkante und folgenden Zackenlöchern messen, und daß die Mittel zur Ableitung eines Kompensationssignals dieses Kompensationssignal aus den gemessenen Abweichungen ableiten.

2. Vorrichtung nach Anspruch 1, **dadurch gekennzeichnet,** daß die Mittel (2,16) zur Abstandsmessung einen Positionsgeber (2) aufweisen.

3. Vorrichtung nach Anspruch 2, **dadurch gekennzeichnet,** daß der Positionsgeber (2) einen Stift (16) und eine piezoelektrischen Wandler enthalten.

4. Vorrichtung nach einem der vorstehenden Ansprüche, enthaltend ein Zackenrad mit einer Mehrzahl von Zackenzähnen (3;6) und einer Andruckrolle (18), welche an der Filmkante anliegt und die Kanten der Zackenlöcher (4) gegen die Zackenzähne (3;6) drückt.

5. Vorrichtung nach einem der vorstehenden Ansprüche, bei welcher die Mittel zur Verwendung des Kompensationssignals eine Verzögerungseinrichtung (10,22) enthalten, welche die Anlegung des Kompensationssignals an den Ablenkgenerator des Lichtpunktabtasters solange verzögern, bis ein Zackenloch des Films (1), für welches das Kompensationssignal bestimmt worden ist, an der Abtaststelle des Abtastgenerators erscheint.

6. Vorrichtung nach einem der vorstehenden Ansprüche, **dadurch gekennzeichnet,** daß die Mittel zur Verwendung des Kompensatinssignals eine Einrichtung (21) aufweisen, welche ein zyklisches Fehlerkompensationssignal ableiten zur Kompensation von zyklischen Fehlern infolge relativer seitlicher Verschiebung der Zackenlöcher (4) auf den Zackenzähnen (3;6).

7. Vorrichtung nach Anspruch 6, bei welcher die Mittel (21) zur Erzeugung des zyklischen Fehlerkompensationssignals einen Speicher (30) zur Speicherung von Signalen aufweisen, welche die zyklischen Fehler für einen ersten und folgenden Zackenzahn angeben, wobei die Mittel zur Ableitung des Gesamtkompensationssignals eine Subtrahiereinrichtung (24) zur Subtraktion des gespeicherten zyklischen Fehlersignals für aufeinanderfolgende Zackenzähne von den für aufeinanderfolgende Zackenlöcher abgeleiteten Kompensationssignalen und eine Zeitsteuereinrichtung (32) zur Synchronisierung des Eintreffens der gespeicherten zyklischen Fehlersignale und der Kompensationssignale an der Subtrahiereinrichtung (24) aufweisen.

8. Verfahren zur Kompensation von Filmunstabilitäten bei einer Vorrichtung zur Umwandlung von auf Film aufgezeichneten Bildern in durch Videosignale dargestellte Bilder, bei welcher der Film im Filmfenster an seiner Kante geführt wird, wobei die Vorrichtung einen Lichtpunktabtaster zur Abtastung der auf den Film aufgezeichneten Bilder mit einem Lichtpunkt an einer Abtaststelle enthält, wenn der Film an dieser Stelle sich vorbeibewegt, und mit einem Abtastgenerator zur Erzeugung eines Abtastmusters für den Lichtpunkt,
**gekennzeichnet durch** die Verfahrensschritte
Messen des Abstandes zwischen der Filmkante und einem ersten Zackenloch auf dem Film an einer Position vor der Abtaststelle in Filmbewegungsrichtung gesehen,
Messen des Abstandes an dieser Position für ein zweites und nachfolgende Zackenlöcher durch Anordnung der Meßeinrichtung derart, daß sie an der Filmkante neben dem ersten Abtastloch anliegt,
Messen von Abweichungen aus der Distanz, die an dem ersten Zackenloch und an dem zweiten und an folgenden Zackenlöchern gemessen ist,
Ableitung eines Kompensationssignals aus den gemessenen Abweichungen und
Zuführung des Kompensationssignals zu dem Abtastgenerator des Lichtpunktabtasters.

## Revendications

1. Appareil de compensation d'instabilité de film dans un couloir de film d'un appareil de conversion entre des Images enregistrées sur un film et des signaux vidéo, dans lequel le film est guidé par margeur dans le couloir de film, l'appareil de conversion comportant des moyens d'analyse par spot de balayage pour l'analyse, par un spot de balayage, des Images enregistrées sur le film à un emplacement d'analyse lorsque le film se déplace au-delà de l'emplacement d'analyse, et des moyens de génération d'un motif d'analyse pour le spot de balayage, l'appareil de compensation comportant des moyens (2,16) de détermination de la position d'un trou pour tambour denté par rapport au bord de film, des moyens (20,22;21) pour déduire un signal de compensation basé sur la position déterminée du trou pour tambour denté, des moyens pour appliquer le signal de compensation pour décaler la position du faisceau d'analyse dudit analyseur par spot de balayage à l'emplacement d'analyse lorsque le film se déplace au-delà de l'emplacement d'analyse, caractérisé en ce que les moyens (2,16) de détermination de la position d'un trou pour tambour denté par rapport au bord de film comportent des moyens (2,16) de mesure de la distance entre le bord de film et un premier trou pour tambour denté à un emplacement en amont de l'emplacement d'analyse dans la direction du mouvement du film, les moyens de mesure de distance (2,16) étant adaptés pour s'appuyer sur le côté du film (1) adjacent au premier trou pour tambour denté, et étant adaptés pour la mesure de déviations à partir de la distance mesurée selon des mesures consécutives de distance entre le bord de film et des trous pour tambour denté suivants, et en ce que les moyens pour déduire un signal de compensation déduisent le signal de compensation à partir des déviations mesurées.

2. Appareil selon la revendication 1, dans lequel les moyens de mesure de distance (2,16) comportent un transducteur de position (2).

3. Apparell selon la revendication 2, dans lequel le transducteur de position (2) comporte une pointe de lecture (16) et un transducteur plézoélectrique.

4. Appareil selon l'une quelconque des revendications précédentes, comprenant une roue de tambour denté comportant une pluralité de dents (3;6) de tambour denté, et un galet presseur (8) s'appuyant sur le bord du film pour solliciter les bords des trous pour tambour denté (4) contre les dents (3;6).

5. Appareil selon l'une quelconque des revendications précédentes, dans lequel les moyens pour appliquer le signal de compensation comportent des moyens (10;22) pour retarder l'application du signal de compensation aux moyens de génération de balayage de l'analyseur par spot de balayage, jusqu'à ce qu'un trou pour tambour denté sur le film (1), pour lequel le signal de compensation est déterminé, arrive à l'emplacement d'analyse des moyens de générations de balayage.

6. Appareil selon l'une quelconque des revendications précédentes, dans lequel les moyens pour appliquer le signal de compensation comportent des moyens (21) pour déduire un signal de compensation d'erreur cyclique pour compenser les erreurs cycliques dues à un déplacement latéral relatif des trous pour tambour denté (4) sur les dents (3;6) de tambour denté.

7. Appareil selon la revendication 6, dans lequel les moyens (21) pour déduire le signal de compensation d'erreur cyclique comportent des moyens de mémorisation (30) pour le stockage de signaux indiquant les erreurs cycliques pour une première dent de tambour denté et des dents de tambour denté consécutives, dans lequel les moyens pour déduire le signal de compensation global comportent des moyens (24) pour soustraire le signal d'erreur cyclique mémorisé pour des dents de tambour denté successives à partir des signaux de compensation déduits des trous pour tambour denté successifs, et des moyens de cadencement (32) pour synchroniser l'arrivée des signaux d'erreurs cycliques mémorisés et des signaux de compensation aux moyens de soustraction (24).

8. Procédé de compensation d'instabilité de film dans un appareil de conversion entre des Images mémorisées sur un film et des Images représentées par des signaux vidéo, dans lequel le film est guidé par margeur dans le couloir de film, l'appareil de conversion comportant des moyens d'analyse par spot de balayage pour l'analyse avec un spot de balayage des images enregistrées sur le film à des emplacements d'analyse lorsque le film se déplace au-delà de l'emplacement d'analyse, et des moyens de génération de balayage pour générer un motif de balayage pour le spot de balayage, caractérisé en ce que le procédé comporte la mesure de la distance entre le bord de film et un premier trou pour tambour denté sur le film à un emplacement en amont de l'emplacement d'analyse selon la direction du déplacement du film, la mesure de ladite distance audit emplacement pour des second et consécutifs trous pour tambour denté en disposant les moyens de mesure en appui contre le bord du film de façon adjacente aux premiers trous pour tambour denté, la mesure de déviations à partir de ladite distance mesurée au premier trou pour tambour denté et au second et consécutifs trous pour tambour denté, la déduction d'un signal de compensation à partir desdites déviations mesurées, et l'application du signal de compensation aux moyens de génération de balayage pour l'analyseur par spot de balayage.
